# EUROPEAN PATENT APPLICATION

(11) **EP 1 039 425 A2**
(43) Date of publication of application: **27.09.2000**
(21) Application number: 00106312.2
(22) Date of filing: 23.03.2000
(51) Int. Cl.: G07F 19/00

(54) **Electronic card for commercial operations and coding console for initially charging a user code in said card**

(30) Priority: 24.03.1999 AR 9901291
(71) Applicant: Paganini, Rubén Nicolas, 1333 Capital Federal, Buenos Aires (AR); Monti de Paganini, Maria Cristina, 1333 Capital Federal, Buenos Aires (AR)
(72) Inventor: Paganini, Rubén Nicolas, 1333 Capital Federal, Buenos Aires (AR); Monti de Paganini, Maria Cristina, 1333 Capital Federal, Buenos Aires (AR)
(74) Representative: Manresa Val, Manuel

(57) **Abstract**

An electronic card (1) of the type used as purchase and/or credit card, and a coding console (16) for initially recording a user code (UC) to a memory of said card (1) which further comprises an electronic circuit (2) based on a microprocessor (11) having contacts (3-6) for plugging connection with said coding console (16) and a card membrane keypad (7) to input an user checking code (UCC) that has to coincide with said user code (UC) to enable a desired commercial operation. The card (1) includes a signal light (8) and a piezoelectric buzzer (9) indicating that a correct user checking code (UCC) has been introduced. The coding console includes magnetic strip reading heads (18) and reading/recording heads (19) for reading/recording card state messages and user code (UC) from/to the card (1), an alphanumeric keyboard (22) for introducing said user code (UC), a display (21) for displaying said card state messages and said allocated user code (UC) and a printing head (23) for printing said user code (UC).

## Description

This invention relates to an electronic card for commercial operations and a coding console to be used for initially recording a user identification code allocated to the user of said card and more particularly it relates to a card of the type including card owner data and identification codes storing means said data and codes having been previously recorded by means of said coding console, which allows to check if a holder of said card is actually its owner or authorised person to use it in commercial operations. That is to say that the user of the card, upon request from the staff in charge of receiving the payment for the sale of a product or rendered service, can prove by means of the card itself that he is entitled to use said card.

Up to now, the purchase or credit cards used for the most varied commercial operations incorporate a magnetic strip where user data and code are recorded, among other possible information. In the moment of purchasing a product or paying a given service, the purchaser is only requested to produce the card, to sign a paper where the data of the customer and card are transcribed and usually to produce the purchaser identity card. This is generally considered sufficient to accept as valid that the holder is the true holder.

Unfortunately it is each time more frequent that persons who are not duly allowed to use card or cards of other true owner to carry out commercial operations to their own and sole profit. In the event of theft, larceny or misplacement of documents including identity card and purchase and/or credit cards, if a corresponding report has not been done immediately, this situation becomes even worse for the card owner because the amounts to be charged on related banking account can reach significant amounts which can cause them serious economic damages.

In order to contribute with an effective solution to these problems, the card which is subject of this invention allows to check whether the holder is the true owner or a person authorised to use said card in purchase and/or credit commercial operations, which is achieved by means of visual and/or sound signals from the card itself and under the eyes of the staff in charge to control and accept corresponding payments to be carried out that way.

That is to say that the invention disclosed below can be embodied with cards of the already mentioned type and which include for example a magnetic strip for storing data for automatic cashiers operation.

As it will be explained thereafter, checking the nature of an "entitled user" is carried out by introducing by hand a personal code in the card, thereafter, if the code introduced is correct, an enabling indicating signal is activated.

Therefore, an object of this invention is providing an electronic card for commercial operations where said card is of the type used as purchase and/or credit card, including card user data and code storing means, such as magnetic strips, in which said data and code storing means comprise in addition an electronic circuit connected with input means for initially recording, by means of a coding console, a user identification code in a memory of said electronic circuit, said card including means for directly and by hand introducing an user checking code (which can be operated at any time said checking is required) said card further including means to inform that the correct code has been introduced.

Another object of the invention is to provide a coding console to be used for initially recording the user identification code allocated to the user of the card which comprises a magnetic strip reading head and a card reading/recording head connected to a microprocessor programmed according to an operation sequence for checking and recording data, codes and card state messages, said microprocessor being in turn connected to an alphanumeric card state messages display, an alphanumeric keypad for initially recording the user identification code and a printing head for printing the allocated user identification code.

In order the object of the invention is clearer and for best understanding it, it has been illustrated in several figures, in which it has been represented in one of the preferred embodiments, by way of example, where:
Fig. 1 shows a general diagram of the main parts allowing the operation of the card object of this invention:
Fig. 2 is a block diagram of an electronic circuit included in Fig. 1;
Fig. 3 shows a card layout of the components illustrated in Fig. 1; and
Fig. 4 is a block diagram of a console used for initially recording the user identification code to the card, said code being allocated to the card or chosen by its owner.

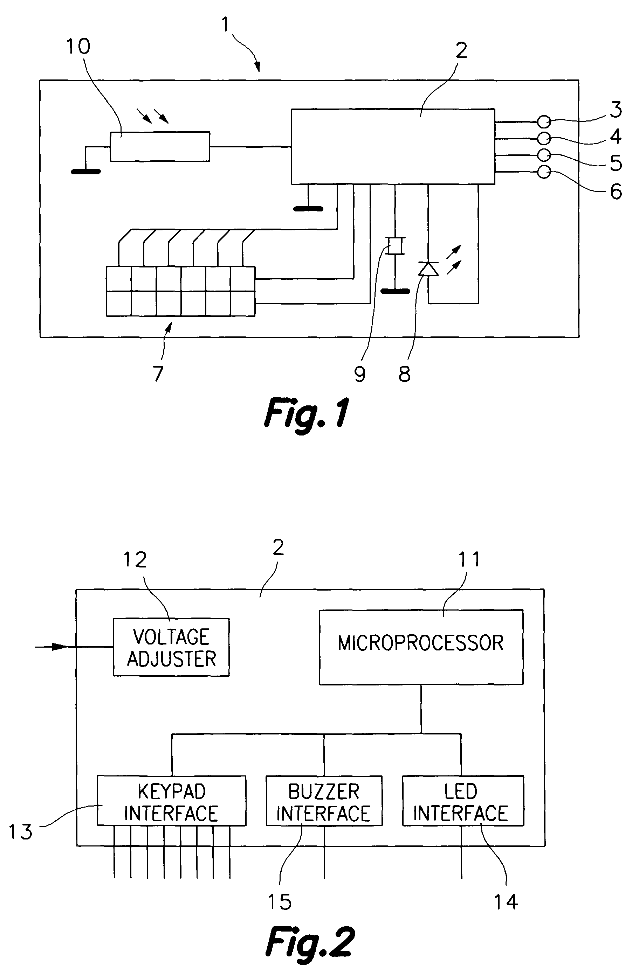

Referring first to Fig. 1, wherein with general numeral 1 the illustration of the card subject of this invention is referred to, user data and code storing means of card 1 are shown, including an electronic circuit 2, which in the practice is an integrated circuit, connected to input means for initially recording a user code UC, comprising a set of pressure-like contacts 3 to 6, accessible from outside the card 1, and made of an unalterable metal.

The card 1 has means to introduce a user checking code UCC for the owner verification when said card is used, which means are also accessible from outside said card 1 and comprise a membrane keypad 7 with twelve preferably alphanumeric keys. In a preferred embodiment of the invention, the code to be loaded comprises six characters, being suggested to use, for example, three numeric and three alphabetic characters, which however will depend on the character combination chosen for initially recording the code.

A signal that a correct user checking code UCC has been introduced is confirmed by means of a visual indicator or display, embodied in this exemplary embodiment by a light emitting diode (LED) 8. At same time this signal is complemented with a piezoelectric buzzer 9 which releases a two-second-long audible tone, so indicating that checking has been carried out.

Both diode 8 lighting y buzzer 8 activation occurs only when said user checking code UCC introduced through the keypad 7 coincides with said user code UC stored in a memory which is included for this purpose in the circuit 2. In addition, it will be noted that when pressing any key on the keypad 7 buzzer 9 is activated to give a short audible tone indicating that a corresponding key was correctly pressed.

The power supply for the components of this card comes from a panel of photocells 10, which results sufficient because of the low consumption of the involved circuits.

In Fig. 2 it can be seen that the electronic circuit 2 includes a microprocessor 11. The stability of the voltage delivered by the photoelectric panel 10 is achieved by means of a voltage adjuster 12. It is also shown that the microprocessor 11 is connected to the keypad 7, to the light emitting diode 8 and the buzzer 9 by means of a keypad interface 13, a display interface 14 and a buzzer interface 15, respectively.

In the described preferred embodiment, the integrated circuit 2 is preferably of "customer" type, of silicon, with capacity for processing and storing data and provided with data input and output ports for purposes of reading the keypad 7, lighting the diode 8, energizing the buzzer 9 and recording the user code UC allocated to each user in an EEPROM memory. The microprocessor 11 is specially programmed for the function it has to carry out in the card object of this invention.

Once the voltage produced by the photocells 10 reaches the operation value required for the normal operation of the circuits included in the card 1, said value being detected by a voltage adjuster 12, an initialisation routine is started by microprocessor 11 where microprocessor records are suitably loaded and input and output ports programmed, remaining then in stand by, that is to say in a waiting state, carrying out periodical readings from the keypad 7. When any key on the keypad 7 is depressed, the corresponding value is stored in a RAM memory of microprocessor 11 as a "key 1" variable, a "logic value 1" is loaded in a predetermined address of said RAM memory working as "key counter", leading the interface 15 of de buzzer 9 to an active state and a waiting routine of 0,5 seconds is started, at the end of which the value of the pushed key is read again and the energizing signal of the buzzer 9 is deactivated. If the value of the pushed key coincides with that previously read, the microprocessor 11 waits for the key release. The above cycle is then repeated loading "key 2" to "key 6", increasing then the key counter until reaching a value equal to 6. At the end of each key reading cycle through the logic and arithmetic unit of microprocessor 11 the value reached by the key counter is compared against the value attributed as a maximum, i. e. 6. When the comparison results in equality between the amount of pushed keys and the preset maximum value 6, the keypad reading routine ends and the code recognition subroutine is initiated.

In this code recognition subroutine, the microprocessor 11 sequentially retrieves from its EEPROM memory the 6-character user code UC stored therein and transferring it to six RAM memory addresses which remain identified as "code 1" to "code 6". From this point, microprocessor 11 starts a cycle of ordinate comparisons between "key 1" and "code 1" up to "key 6" and "code 6" by using the same address of the RAM memory which operates as a key counter. If, as a result of the sequential comparisons carried out, the keyboarded user checking code UCC results equal to the stored user code UC, the microprocessor 11 leads to active level the energizing signals of diode 8 and buzzer 9 and starts a timing routine until five seconds completion, the diode 8 and buzzer 9 energization being then deactivated, and program started again.

If the keyboarded user checking code UCC is not the same as the EEPROM memory stored user code UC in microprocessor 11, this later intermittently activates the buzzer 9 during five seconds, according to a sequence of half second activation and one second silence.

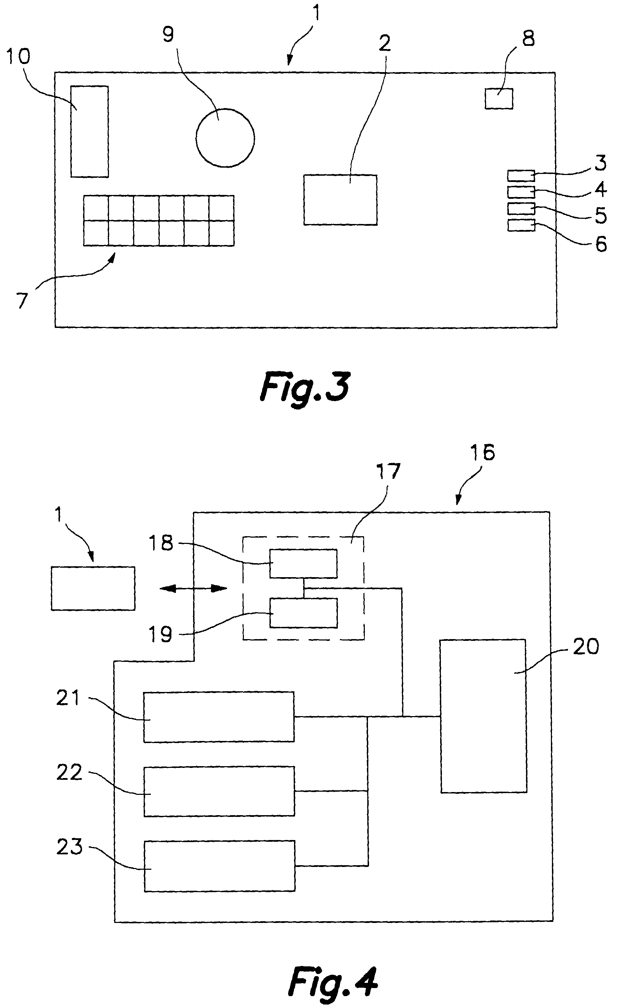

For initially recording the user code UC in the card 1 an external device is used such as the one shown in Fig. 4 and generally indicated with numeral 16, which defines a coding console the structure and operation of which can be compared with devices used as automatic cashiers. Thus, upon introduction of the card 1 in a reading/recording section 17 of said coding console 16, this later supplies a card circuit 2 supply voltage through contacts 3 and 6, while a chosen user code UC is loaded by means of contacts 4 and 5, via stop request. This user code UC remains permanently recorded in the memory of the card 1. In said section 17, a magnetic strip reading head 18 detects the presence of the card 1 and gives an activation order to a microprocessor 20 by means of a signal generated by its own electronic circuit. Said microprocessor 20 in turn gives a reading order to said reading head 18 and compares the read data with those stored in the memory of the microprocessor 20. If the compared data are correct, that is to say if the card introduced is the one designed to be used by means of the console 16, the microprocessor 20 orders a card reading/recording head 19 to read its state in the memory thereof If this state corresponds to a disabled card, the microprocessor 20 sends a message to a display or screen 21 advising on that disability and orders the magnetic strip reading head 12 to expel the card 1. If the state corresponds to a "virgin" card, the microprocessor 20 reads through the reading/recording head 19 the keypad 7 configuration and sends to the display 21 the information on the alphanumeric characters available in the card 1 and that the user can combine at his choice.

To achieve this later, the microprocessor 20 starts a reading routine for a preferably alphanumeric keyboard 22, in which it only recognises said enabled characters. After the characters conforming the user checking code UCC have being introduced, the microprocessor 20 records in the memory of the card 1 the code introduced by the user, by using the reading/recording head 19. During this operation, the microprocessor 20 sends to the display 21 information corresponding to the amount of digits selected up to this moment. In same way, it records in the card 1 the new state corresponding to "card with code". The microprocessor 20 sends now the order to print the recorded code to a printing head 23. After this operation is performed, the microprocessor 20 orders to the magnetic strip reading head 18 to expel the card 1.

If on the contrary the card state corresponds to a "card with code", the microprocessor 20 reads, by means of the reading/recording head 19, both the current user code UC recorded in the memory of the card 1 as the configuration of its keyboard 22. Thereafter, it sends to the display 21 the order to show the legend "introduce the current code" and it proceeds to read the keyboard 22. Key bounce elimination and timing routines occurs in this operation. Said timing routines allow to limit the time available for the input of the user code UC by the user, so that if a time of, for example, four seconds is exceeded between the keyboarding of one character and another, the operation is considered cancelled. The user code UC keyboarded by the user is temporary stored in a RAM memory of the microprocessor 20 and compared with the other one read before from the memory of the card 1. If both result to be equal, the microprocessor 20 starts again the reading of the keyboard 22 routine, records in the memory of the card 1 the user code UC introduced by the user, sends to the display 21 information on the amount of digits selected up to that moment, records in the card a new state corresponding to "card with code", sends to the printing head 23 the order to print the recorded user code UC and orders to the magnetic strip reading head 18 to expel the card 1, this later being now in conditions to be used by his authorised owner.

If both codes result to be different, the microprocessor 20 writes in the display 21 "incorrect code" and asks "try again or cancel the operation?". By means of an internal record of the microprocessor 20 the amount of intents are counted. If the user answers YES preceding steps are repeated twice. If an incorrect code is still introduced, the microprocessor 20 writes in the display 21 "disabled card" and it records in the memory of the card 1 a state corresponding to "disabled card" by means of the reading/recording head 19, and then it orders to expel the card from the console 16. If some of the inputs of the current code results incorrect, the process comes back to the reading of keyboard 22 routine as above mentioned. If the answer is NO, the microprocessor 20 considers the operation is finished and order to expel the card 1.

Fig. 3 shows a layout of the components on this card according to a preferred embodiment, and it can be seen those that are accessible or are visible from outside the card 1, that is to say keypad 7, light emitting diode 8, photoelectric panel 10 and contacts 3 to 6, as well as the circuit 2 which remains concealed. On its side, buzzer 9 can either remain visible, in such a way that is wished or convenient in the practice, or concealed, which mainly depends on mere aesthetic and/or commercial reasons.

## Claims

1. An electronic card (1) for commercial operations, wherein said card (1) is of the type used as purchase and/or credit card and includes card user data and code storing means, such as magnetic strips, characterised in that said data and code storing means comprise in addition an electronic circuit (2) connected to input means for initially recording a user code (UC) in a memory of said electronic circuit (2) using a coding console (16), and direct and by hand code input means to input an user checking code (UCC) which has to coincide with said user code (UC) previously recorded for enabling the use of the card (1), said input means being operable at any time said checking is required, said card (1) further including means to inform that a correct user checking code (UCC) has been introduced.

2. An electronic card according to claim 1, characterised in that said electronic circuit (2) includes a microprocessor (11).

3. An electronic card according to claims 1 and 2, characterised in that said card input means for initially recording the user code (UC) comprise contacts (3 to 6) which can be connected to said coding console (16), two of these contacts (3, 6) being for the electronic circuit (2) power supply and the remaining two contacts (4, 5) being for initially recording the user code (UC).

4. An electronic card according to claims 2 and 3, characterised in that said direct and by hand code input means to input the user checking code (UCC) comprise a membrane keypad (7) having twelve keys which is connected to said microprocessor (11) through a keypad interface (13).

5. An electronic card according to any of claims 2 to 4, characterised in that said means to inform that a correct user checking code (UCC) has been introduced include a visual indicator or display defined by a light emitting diode (8) connected to said microprocessor (11) through a display interface (14).

6. An electronic card according to any of claims 2 to 4, characterised in that said means to inform that a correct user checking code (UCC) has been introduced include a piezoelectric buzzer (9) connected to said microprocessor (11) through a buzzer interface (15).

7. An electronic card according to any of claims 2 to 6 characterised in that said microprocessor (11) includes an EEPROM memory for storing the user code (UC) allocated to the card owner.

8. An electronic card according to any preceding claim, characterised in that said electronic circuit (2) is connected to a photocell supplying panel (10) through a voltage adjusting circuit (12).

9. A coding console (16) to be used for initially recording the user code (UC) allocated to the card owner according to any preceding claim, characterised in that it comprises a magnetic strip reading head (18) and a card reading/recording head (19) connected to a microprocessor (20) programmed according to an operation sequence for checking and recording data, codes and card state messages, said microprocessor (20) being in turn connected to an alphanumeric display (21) for displaying card state messages, an alphanumeric keyboard (22) for initially recording the user code (UC) and a printing head (23) for printing the allocated user code (UC).
